# EUROPÄISCHE PATENTSCHRIFT

(11) **EP 3 583 516 B1**
(45) Veröffentlichungstag und Bekanntmachung des Hinweises auf die Patenterteilung: **20.10.2021**
(21) Anmeldenummer: 18703590.2
(22) Anmeldetag: 06.02.2018
(51) Int. Cl.: G06F 16/904, G06F 16/901

(54) **EIN MIT EINER VERPACKUNGSANLAGE ASSOZIIERTER GRAPH**
GRAPH ASSOCIATED WITH A PACKAGING SYSTEM
GRAPHE ASSOCIÉ À UNE INSTALLATION D'EMBALLAGE

(30) Priorität: 15.02.2017 DE 102017102992
(43) Veröffentlichungstag der Anmeldung: 25.12.2019
(73) Patentinhaber: SIG Technology AG, 8212 Neuhausen am Rheinfall (CH)
(72) Erfinder: EICKHOFF, Matthias, 52477 Alsdorf (DE)
(74) Vertreter: Cohausz & Florack
(86) Internationale Anmeldenummer: PCT/EP2018/052945
(87) Internationale Veröffentlichungsnummer: WO 2018/149697

(56) Entgegenhaltungen:
- EP-A1- 2 963 599
- US-A1- 2013 235 041
- Anonymous: "Case Study 11: Fuel flow in a distribution network", Flownex Knowledgebase, 14. Juli 2016 (2016-07-14), Seiten 1-60, XP055461067, Gefunden im Internet: URL:https://web.archive.org/web/2016071406 5642/http://computech-pl.com/PLIKI/przykla dy/Case%20Study%2011%20Fuel%20distribution .pdf [gefunden am 2018-03-20]

## Beschreibung

### Hintergrund

Es sind Verpackungsanlagen bekannt, in denen eine Vielzahl von verschiedenen Komponenten zum Einsatz kommen wie beispielsweise Erhitzungsanlagen, Füllmaschinen, Applikatoren zum Aufbringen von Verschlüssen und/oder Trinkhalmen, Weichen, Schütten, Sammelpacker und Kartonierer. Um verschiedene Verpackungsprozesse ausführen zu können, kommen in diesen Verpackungsanlagen beispielsweise Weichen zum Einsatz, mit denen eine oder mehrere Komponenten umfahren und/oder zusätzliche angefahren werden können. Gerade in komplexen Verpackungsanlagen mit einer Vielzahl von Weichen zum Teilen und/oder Vereinigen von Verpackungsprozessverbindungen ergibt sich hierdurch eine Vielzahl von durch die Verpackungsanlage ausführbaren Verpackungsprozessen.

### Zusammenfassung einiger beispielhafter Ausführungsformen der Erfindung

### Die Ansprüche definieren die Erfindung.

Zum Überwachen einer solchen Verpackungsanlage und des durch die Verpackungsanlage ausgeführten Verpackungsprozesses, kann es beispielsweise wünschenswert sein, eine Repräsentation des durch die Verpackungsanlage ausgeführten Verpackungsprozesses zu bestimmen und beispielsweise einem Benutzer auf einer Überwachungsvorrichtung anzeigen zu können. Hierfür kann für jede der verschiedenen durch eine Verpackungsanlage ausführbaren Verpackungsprozesse jeweils eine darstellbare Repräsentation vorab bestimmt und entsprechende Daten in einem Speicher der Überwachungsvorrichtung gespeichert werden, so dass zum Anzeigen anschließend nur noch die richtige Repräsentation ausgewählt und die entsprechenden Daten aus dem Speicher geladen werden müssen. Dies ist jedoch mit einem hohen Speicherbedarf verbunden, da für jede der durch die Verpackungsanlage ausführbaren Verpackungsprozesse Daten einer entsprechenden Repräsentation in dem Speicher gespeichert werden müssen. Ferner müssen bei Änderungen der Verpackungsanlage (z.B. Hinzufügen und/oder Entfernen einer oder mehrerer Komponenten) alle Repräsentationen der durch die Verpackungsanlage ausführbaren Verpackungsprozesse erneut vorab bestimmt und entsprechende Daten in einem Speicher der Überwachungsvorrichtung gespeichert werden.

Zum Beispiel ist aus der Patentanmeldung EP 2 568 348 A1 bekannt, zur Unterstützung der Fehlerdiagnose einer Industrieanlage, die eine Mehrzahl von über ein Rohrleitungssystem verbundenen Anlagenkomponenten aufweist, vorzusehen, jede Anlagenkomponente einem von mehreren abstrakten Komponententypen zuzuordnen, wobei jedem Komponententyp wiederum ein gewichteter, gerichteter Komponentengraph zugeordnet wird. Ein RI-Fließbild der Industrieanlage wird ausgehend von einem Startpunkt entlang eines Rohrleitungssystems komponentenweise abgearbeitet. Dabei wird bei jeder Anlagenkomponente auf deren dem Komponententyp nach zugeordneten Komponentengraphen zugegriffen. Die einzelnen Komponentengraphen werden zu einem System von gewichteten, gerichteten Gesamtgraphen der Industrieanlage zusammengefügt, deren Knoten jeweils mehreren einzelnen Anlagenkomponenten zugeordnet sind. Ferner offenbart Patentanmeldung EP 2 963 599 A1 ein Verfahren zur Ausführung eines Fertigungsprozesses.

Die vorliegende Erfindung hat sich daher unter anderem die Aufgabe gestellt, eine oder mehrere der oben beschriebenen Nachteile zu überwinden. Diese Aufgabe wird durch den Gegenstand der unabhängigen Ansprüche gelöst.

### Gemäß der Erfindung wird ein Verfahren, ausgeführt durch eine

Datenverarbeitungsvorrichtung, offenbart, das folgendes umfasst:
- Erhalten und/oder Bestimmen von Graphdaten, wobei die Graphdaten einen mit einer Verpackungsanlage assoziierten Graphen repräsentieren, wobei der Graph eine Vielzahl von Knoten und eine Vielzahl von Kanten umfasst, wobei jede Kante der Vielzahl von Kanten zwei Knoten der Vielzahl von Knoten miteinander verbindet, wobei jeder Knoten der Vielzahl von Knoten eine Komponente der Verpackungsanlage repräsentiert, und wobei jede Kante der Vielzahl von Kanten eine mögliche Verpackungsprozessverbindung zwischen zwei Komponenten der Verpackungsanlage repräsentiert;
- Speichern der Graphdaten in einem Speicher der Datenverarbeitungsvorrichtung;
- Empfangen von Verpackungsanlagenzustandsdaten, wobei die Verpackungsanlagenzustandsdaten indikativ für einen durch die Verpackungsanlage ausführbaren Verpackungsprozess sind, und wobei die Verpackungsanlagenzustandsdaten von einer oder mehrerer Komponenten der Verpackungsanlage über eine Kommunikationsverbindung an die Datenverarbeitungsvorrichtung kommuniziert werden; und
- Bestimmen einer Repräsentation des durch die Verpackungsanlage ausführbaren Verpackungsprozesses zumindest teilweise basierend auf den Verpackungsanlagenzustandsdaten und dem von den Graphdaten repräsentierten Graphen, so dass für das Bestimmen nur die Graphdaten in einem Speicher der Datenverarbeitungsvorrichtung gespeichert sein müssen, wobei die Repräsentation des durch die Verpackungsanlage ausführbaren Verpackungsprozesses eine Untermenge der Vielzahl von Knoten und/oder eine Untermenge der Vielzahl von Kanten umfasst.

Das erfindungsgemäße Verfahren ist beispielsweise ein Verfahren zum Erhalten und/oder Erzeugen von einen Graphen repräsentierenden Graphdaten zum Bestimmen einer Repräsentation eines durch eine Verpackungsanlage ausführbaren Verpackungsprozesses.

Ferner wird gemäß der Erfindung ein Computerprogramm offenbart, das Programmanweisungen umfasst, die einen Prozessor zur Ausführung und/oder Steuerung des Verfahrens gemäß der Erfindung veranlassen, wenn das Computerprogramm von dem Prozessor ausgeführt wird. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden.

Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein.

Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger/persistenter oder flüchtiger) Programmspeicher des Prozessors oder ein Teil davon. Das Speichermedium kann beispielsweise ein gegenständliches oder körperliches Speichermedium sein.

Ferner wird gemäß der Erfindung eine Datenverarbeitungsvorrichtung offenbart, eingerichtet zur Ausführung und/oder Steuerung des erfindungsgemäßen Verfahrens oder umfassend jeweilige Mittel zur Ausführung und/oder Steuerung der Schritte des erfindungsgemäßen Verfahrens. Dabei können entweder alle Schritte des erfindungsgemäßen Verfahrens von den Mitteln gesteuert werden, oder alle Schritte des erfindungsgemäßen Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden.

Die Mittel der offenbarten Datenverarbeitungsvorrichtung können Hardware- und/oder Software-Komponenten umfassen. Die Mittel können beispielsweise mindestens einen Speicher mit Programmanweisungen eines Computerprogramms (z.B. des erfindungsgemäßen Computerprogramms) und mindestens einen Prozessor ausgebildet zum Ausführen von Programmanweisungen aus dem mindestens einen Speicher umfassen.

Dementsprechend soll gemäß der Erfindung auch zumindest eine Datenverarbeitungsvorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Datenverarbeitungsvorrichtung zu veranlassen, das Verfahren gemäß der Erfindung auszuführen und/oder zu steuern.

Die erfindungsgemäße Datenverarbeitungsvorrichtung ist beispielsweise eine Überwachungsvorrichtung für eine Verpackungsanlage.

Ferner wird gemäß der Erfindung ein System offenbart, das folgendes umfasst:
- eine erfindungsgemäße Datenverarbeitungsvorrichtung; und
- eine Verpackungsanlage.

Im Folgenden werden die Merkmale und Eigenschaften des erfindungsgemäßen Verfahrens, des erfindungsgemäßen Computerprogramms, der erfindungsgemäßen Datenverarbeitungsvorrichtung sowie des erfindungsgemäßen Systems - teilweise beispielhaft - beschrieben.

Eine Verpackungsanlage ist, wie bereits Eingangs offenbart, beispielsweise eine Anlage zum Verpacken von Waren wie beispielweise Lebensmitteln. Insbesondere soll unter einer Verpackungsanlage eine Getränkeabfüllanlage und/oder ein Teil einer Getränkeabfüllanlage verstanden werden. In solchen Anlagen kommen häufig eine Vielzahl von verschiedenen Komponenten zum Einsatz wie beispielsweise Erhitzungsanlagen (z.B. Erhitzungsanlagen zum Ultrahocherhitzen des Füllguts), Füllmaschinen, Applikatoren zum Anbringen von Verschlüssen und/oder Trinkhalmen, Weichen (z.B. Weichen zum Teilen und/oder Vereinigen von Verpackungsprozessverbindungen), Shrinker, Schütten, Sammelpacker, Palettierer, Puffer, Vertikalspeicher und Kartonierer. Auf diesen Komponenten laufen verschiedene Anwendungen (z.B. in Form eines durch einen Prozessor dieser Komponente ausgeführten Computerprogramms). Die verschiedenen Komponenten und Anwendungen der Verpackungsanlage können zumindest teilweise Verpackungsanlagenzustandsdaten zur Verfügung stellen.

Unter einem Graph, der mit einer Verpackungsanlage assoziiert ist, soll beispielsweise eine Struktur (z.B. eine graphisch darstellbare Struktur) verstanden werden, die eine Vielzahl von Komponenten der Verpackungsanlage in Form von Knoten zusammen mit den zwischen dieser Vielzahl von Komponenten der Verpackungsanlage bestehenden Verpackungsprozessverbindungen in Form von Kanten repräsentiert. Dabei ist eine Verpackungsprozessverbindung beispielsweise eine während eines durch die Verpackungsanlage ausführbaren Verpackungsprozesses verwendbare Verbindung zwischen zwei Komponenten der Verpackungsanlage. Eine solche Verpackungsprozessverbindung kann beispielsweise in Form eine Förderstrecke (z.B. als Förderband und/oder als Rollenband) zwischen dem Ausgang einer Komponente und dem Eingang einer anderen Komponente in der Verpackungsanlage gebildet sein. Wenn eine Komponente der Verpackungsanlage verschiedene Ausgänge aufweist, die mit Eingängen verschiedener Komponenten der Verpackungsanlage verbunden sind, kann jede dieser Verpackungsprozessverbindungen beispielsweise durch eine jeweilige Kante der Vielzahl von Kanten repräsentiert werden. Dementsprechend kann ein solcher Graph alle durch die mit dem Graphen assoziierte Verpackungsanlage ausführbaren Verpackungsprozess darstellen (z.B. graphisch darstellen).

Die Graphdaten repräsentieren den Graphen beispielsweise durch in den Graphdaten enthaltene Definitionen der Vielzahl von Knoten und/oder der Vielzahl von Kanten des Graphen. Zum Beispiel enthalten die Graphdaten für jeden Knoten der Vielzahl von Knoten eine Knoten-Datenstruktur, die den jeweiligen Knoten definiert, und/oder für jede Kante der Vielzahl von Kanten eine Kanten-Datenstruktur, die die jeweilige Kante definiert. Eine Knoten-Datenstruktur enthält beispielsweise Daten zum Identifizieren und/oder Beschreiben des Knoten. Ferner kann eine Knoten-Datenstruktur beispielsweise Metadaten, die die durch den Knoten repräsentierte Komponente der Verpackungsanlage identifizieren und/oder beschreiben, und/oder Logikdaten, die die Funktionalität der Komponente (z.B. eine Funktionalität einer Weiche und/oder einer Schütte) beschreiben, enthalten. Eine Kanten-Datenstruktur enthält beispielsweise Daten zum Identifizieren und/oder Beschreiben der Kante wie beispielsweise Daten, die die zwei durch die Kante verbundenen Knoten identifizieren. Ferner kann eine Kanten-Datenstruktur ebenfalls Metadaten und/oder Logikdaten enthalten. Es versteht sich, dass die Graphdaten nicht auf diese Datenstrukturen beschränkt sind und alternativ oder zusätzlich andere Datenstrukturen enthalten können.

Unter dem Erhalten der Graphdaten soll beispielsweise verstanden werden, dass die Graphdaten durch die Datenverarbeitungsvorrichtung über eine Kommunikationsverbindung empfangen und/oder von einer tragbaren Speichervorrichtung ausgelesen und/oder in Form einer Benutzereingabe erfasst werden. Zum Beispiel kann die Datenverarbeitungsvorrichtung entsprechend Mittel wie beispielsweise eine Kommunikationsschnittstelle (z.B. ein Netzwerkadapter) zum Empfangen von Daten und/oder eine Speicherschnittstelle (z.B. ein Laufwerk und/oder eine Laufwerkschnittstelle) zum Auslesen von Daten von einer tragbaren Speichervorrichtung und/oder eine Benutzerschnittstelle (z.B. ein Bildschirm wie berührungsempfindlicher Bildschirm, eine Tastatur, eine Maus, ein Mikrofon und/oder eine Kamera) zum Erfassen von Daten in Form einer Benutzereingabe umfassen.

Alternativ oder zusätzlich können die Graphdaten durch die Datenverarbeitungsvorrichtung bestimmt werden. Unter dem Bestimmen der Graphdaten soll beispielsweise das Erzeugen und/oder das Berechnen der Graphdaten verstanden werden. Das Bestimmen der Graphdaten kann zum Beispiel zumindest teilweise basierend auf durch die Datenverarbeitungsvorrichtung erhaltenen Daten (z.B. durch die Datenverarbeitungsvorrichtung über eine Kommunikationsverbindung empfangene und/oder von einer tragbaren Speichervorrichtung ausgelesene und/oder in Form einer Benutzereingabe erfasste Daten) und/oder zumindest teilweise basierend auf vorgegebenen Regeln (z.B. Regeln eines Algorithmus) zum Bestimmen eines mit einer Verpackungsanlage assoziierten Graphen und/oder zum Bestimmen von Graphdaten, die einen mit einer Verpackungsanlage assoziierten Graphen repräsentieren, erfolgen.

Die Graphdaten werden in einem Speicher der Datenverarbeitungsvorrichtung gespeichert. Bei dem Speicher der Datenverarbeitungsvorrichtung kann es sich um einen nicht-flüchtigen Speicher (z.B. einen Programmspeicher) der Datenverarbeitungsvorrichtung und/oder um einen flüchtigen Speicher (z.B. einen Hauptspeicher) der Datenverarbeitungsvorrichtung handeln. Dabei soll unter einem Programmspeicher beispielsweise der Speicher der Datenverarbeitungsvorrichtung verstanden werden, in dem Computerprogramme und Programmanweisungen sowie Daten dauerhaft gespeichert werden. Ein Beispiel für einen Programmspeicher einer Datenverarbeitungsvorrichtung ist eine Festplatte. Ein Hauptspeicher ist beispielsweise der Speicher der Datenverarbeitungsvorrichtung, der die durch einen Prozessor der Datenverarbeitungsvorrichtung ausgeführten Computerprogramme und/oder Programmanweisungen enthält und in dem beispielsweise Zwischenergebnisse oder ähnliches gespeichert (z.B. zwischengespeichert) werden. Ein Beispiel für einen Hauptspeicher einer Datenverarbeitungsvorrichtung ist ein RAM-Speicher (Random-Access-Memory-Spcicher) wie ein DRAM-Speicher (Dynamic-Random-Access-Memory-Speicher).

Der Graph kann, wie oben offenbart, alle durch die mit dem Graphen assoziierte Verpackungsanlage ausführbaren Verpackungsprozesse darstellen. Das Speichern der Graphdaten stellt somit eine besonders effiziente Möglichkeit zum Speichern von Repräsentationen der durch die mit dem Graphen assoziierte Verpackungsanlage ausführbaren Verpackungsprozesse dar. Denn es ist nicht notwendig, für jede der durch die mit dem Graphen assoziierte Verpackungsanlage ausführbaren Verpackungsprozesse eine eigene Repräsentation zu bestimmen und entsprechende Daten zu speichern. Auch muss bei Änderungen der Verpackungsanlage (z.B. Hinzufügen und/oder Entfernen von einer oder mehreren Komponenten) nur der Graph (und nicht eine Vielzahl von Repräsentation) angepasst werden.

Weitere Merkmale und Eigenschaften des erfindungsgemäßen Verfahrens, des erfindungsgemäßen Computerprogramms, der erfindungsgemäßen Datenverarbeitungsvorrichtung sowie des erfindungsgemäßen Systems werden im Folgenden anhand von beispielhaften Ausführungsformen der Erfindung erläutert.

Gemäß einer beispielhaften Ausführungsform der Erfindung ist die Verpackungsanlage eingerichtet, zumindest zwei verschiedene Verpackungsprozesse auszuführen.

Dabei soll unter einem Verpackungsprozess beispielsweise der Prozess zum Verpacken einer Ware (z.B. der Prozess zum Abfüllen eines Getränks in eine Packung und zum Weiterverarbeiten der befüllten Packung) verstanden werden. Zum Ausführen eines solchen Verpackungsprozesses kann die Verpackungsanlage verschiedene Komponenten wie beispielsweise Erhitzungsanlagen (z.B. Erhitzungsanlagen zum Ultrahocherhitzen des Füllguts), Füllmaschinen, Applikatoren zum Anbringen von Verschlüssen und/oder Trinkhalmen, Weichen (z.B. Weichen zum Teilen und/oder Vereinigen von Verpackungsprozessverbindungen), Shrinker, Schütten, Sammelpacker, Palettierer, Puffer, Vertikalspeicher und Kartonierer umfassen. Die zumindest zwei verschiedenen Verpackungsprozesse unterscheiden sich beispielsweise durch die an dem Ausführen des Verpackungsprozesses beteiligten Komponenten der Verpackungsanlage.

Um verschiedene Verpackungsprozesse durch eine Verpackungsanlage ausführen zu können, können beispielsweise Komponenten mit mehreren Ausgängen und/oder Eingängen (z.B. Weichen) in der Verpackungsanlage vorgesehen sein, die ein Umfahren von Komponenten der Verpackungsanlage ermöglichen. Zum Beispiel können Applikatoren zum Anbringen von Verschlüssen und/oder Trinkhalmen umfahren werden, wenn in einem Verpackungsprozess keine Verschlüsse und/oder Trinkhalme auf den Packungen angebracht werden sollen. In einem anderen Verpackungsprozess werden die Applikatoren zum Anbringen von Verschlüssen und/oder Trinkhalmen dagegen angefahren, um Verschlüsse und/oder Trinkhalme auf den Packungen anzubringen.

Gemäß der Erfindung umfasst das Verfahren ferner:
- Erhalten von Verpackungsanlagenzustandsdaten, wobei die Verpackungsanlagenzustandsdaten indikativ für einen durch die Verpackungsanlage ausführbaren Verpackungsprozess sind; und
- Bestimmen einer Repräsentation des durch die Verpackungsanlage ausführbaren Verpackungsprozesses zumindest teilweise basierend auf den Verpackungsanlagenzustandsdaten und den von den Graphdaten repräsentierten Graphen.

Die Verpackungsanlagenzustandsdaten werden von einer oder mehrerer Komponenten der Verpackungsanlage über eine Kommunikationsverbindung an die Datenverarbeitungsvorrichtung kommuniziert. Das Erhalten der Verpackungsanlagenzustandsdaten erfolgt durch das Empfangen der Verpackungsanlagenzustandsdaten durch die Datenverarbeitungsvorrichtung. Zum Beispiel kann die Datenverarbeitungsvorrichtung, wie oben offenbart, entsprechend Mittel wie beispielsweise eine Kommunikationsschnittstelle zum Empfangen von Daten umfassen.

Verschiedene Verpackungsprozesse können sich beispielsweise durch die an dem Ausführen des jeweiligen Verpackungsprozesses beteiligten Komponenten der Verpackungsanlage unterscheiden. Dementsprechend können die Verpackungsanlagenzustandsdaten zum Beispiel Informationen zur Aktivität und/oder zum aktiven Ausgang einer oder mehrerer Komponenten der Verpackungsanlage enthalten. Informationen zur Aktivität einer Komponente der Verpackungsanlage sind beispielsweise indikativ dafür, ob die Komponente der Verpackungsanlage während des Verpackungsprozesses aktiv ist (d.h. an dem Verpackungsprozess beteiligt ist) und/oder während des Verpackungsprozesses inaktiv ist (d.h. nicht an dem Verpackungsprozess beteiligt ist). Informationen zum aktiven Ausgang einer Komponente der Verpackungsanlage sind beispielsweise indikativ dafür, welcher Ausgang der Komponente während des Verpackungsprozesses aktiv ist (d.h. während des Verpackungsprozesses verwendet wird) und welcher Ausgang der Komponente während des Verpackungsprozesses inaktiv ist (d.h. während des Verpackungsprozesses nicht verwendet wird). Diese Informationen können somit indikativ dafür sein, ob eine mit einem Ausgang der Komponenten verbundene Komponente während des Verpackungsprozesses aktiv ist (d.h. an dem Verpackungsprozess beteiligt ist) und/oder während des Verpackungsprozesses inaktiv ist (d.h. nicht an dem Verpackungsprozess beteiligt ist). Zum Beispiel können Informationen zum aktiven Ausgang einer Weiche der Verpackungsanlage indikativ für die Weichenstellung sein. Wenn sich aus der Weichenstellung einer Weiche ergibt, dass die mit einem inaktiven Ausgang der Weiche verbundene Komponente während des Verpackungsprozesses umfahren wird, ist diese Komponenten beispielsweise nicht an dem Verpackungsprozess beteiligt und somit inaktiv.

Die Repräsentation des durch die Verpackungsanlage ausführbaren Verpackungsprozesses ist beispielsweise ein Teilgraph und/oder ein Untergraph des mit der Verpackungsanlage assoziierten Graphen. Die Repräsentation des durch die Verpackungsanlage ausführbaren Verpackungsprozesses umfasst eine Untermenge der Vielzahl von Knoten und/oder eine Untermenge der Vielzahl von Kanten.

Zum Beispiel wird die Repräsentation des durch die Verpackungsanlage ausführbaren Verpackungsprozesses derart bestimmt, dass sie nur die Knoten der Vielzahl von Knoten, die während des Verpackungsprozesses aktive Komponenten der Verpackungsanlage repräsentieren, umfasst.

Der Graph stellt somit eine besonders effiziente Möglichkeit zum Speichern und Bestimmen einer Repräsentation des durch die Verpackungsanlage ausführbaren Verpackungsprozesses dar. Ein aufwändiges vorab Bestimmen von Repräsentation aller durch die Verpackungsanlage ausführbarer Verpackungsprozesse und das Speichern entsprechender Daten ist nicht notwendig. Stattdessen kann die Repräsentation eines durch die Verpackungsanlage ausführbaren Verpackungsprozesses zumindest teilweise basierend auf dem Graphen bestimmt werden, so dass für das Bestimmen nur die Graphdaten in einem Speicher der Datenverarbeitungsvorrichtung gespeichert sein müssen.

Gemäß einer beispielhaften Ausführungsform der Erfindung ist jede Kante der Vielzahl von Kanten eine gerichtete Kante. Eine gerichtete Kante repräsentiert beispielsweise eine Verbindung zwischen einem Startknoten und einem Endknoten, wobei die gerichtete Kante eine Orientierung von dem Startknoten zu dem Endknoten aufweist.

Ferner ist jede Kante der Vielzahl von Kanten beispielsweise aktivierbar und inaktivierbar (d.h. deaktivierbar). Dabei ist die Aktivität jeder Kante der Vielzahl von Kanten zumindest mit der Aktivität der durch den Startknoten der jeweiligen Kante der Vielzahl von Kanten repräsentierten Komponente der Verpackungsanlage und/oder der Aktivität zumindest eines Ausgangs (z.B. eines vorgegebenen Ausgangs) der durch den Startknoten der jeweiligen Kante der Vielzahl von Kanten repräsentierten Komponente der Verpackungsanlage assoziiert.

Wenn die durch den Startknoten einer Kante der Vielzahl von Kanten repräsentierte Komponente der Verpackungsanlage nur einen Ausgang aufweist, ist die Aktivität dieser Kante beispielsweise mit der Aktivität der durch den Startknoten der Kante repräsentierten Komponente der Verpackungsanlage und/oder mit der Aktivität des Ausgangs der durch den Startknoten der Kante repräsentierten Komponente der Verpackungsanlage assoziiert. In diesem Fall ist die Kante beispielsweise nur dann aktiv, wenn die durch den Startknoten der Kante repräsentierte Komponente der Verpackungsanlage und/oder der Ausgang der durch den Startknoten der Kante repräsentierten Komponente der Verpackungsanlage aktiv ist.

Wenn die durch den Startknoten einer Kante der Vielzahl von Kanten repräsentierte Komponente der Verpackungsanlage dagegen mehrere Ausgänge aufweist, ist die Aktivität dieser Kante beispielsweise mit der Aktivität zumindest eines Ausgangs (z.B. eines vorgegebenen Ausgangs) der durch den Startknoten der Kante repräsentierten Komponente der Verpackungsanlage assoziiert. In diesem Fall ist die Kante dementsprechend beispielsweise nur dann aktiv, wenn der zumindest eine Ausgang (z.B. der vorgegebene Ausgang) der durch den Startknoten der Kante repräsentierten Komponente der Verpackungsanlage aktiv ist. Dies ist beispielsweise sinnvoll, wenn die Kante eine Verpackungsprozessverbindung zwischen diesem Ausgang (z.B. dem vorgegebenen Ausgang) der durch den Startknoten der Kante repräsentierten Komponente der Verpackungsanlage und der durch den Endknoten der Kante repräsentierten Komponente der Verpackungsanlage repräsentiert.

Ferner kann die Aktivität einer oder mehrerer Kanten der Vielzahl von Kanten zusätzlich auch mit der Aktivität eines oder mehrerer weiterer Knoten (z.B. dem Endknoten) und/oder der Aktivität eines oder mehrerer weiterer Ausgänge und/oder Eingänge von einem oder mehreren weiteren Knoten (z.B. dem Endknoten) assoziiert sein. Zum Beispiel kann die Aktivität zumindest einer Kante der Vielzahl von Kanten zusätzlich auch mit der Aktivität des Endknoten der Kante und/oder der Aktivität zumindest eines Eingangs des Endknoten der Kante assoziiert sein. Dies ist beispielsweise vorteilhaft, wenn die durch den Endknoten der Kante repräsentierte Komponente der Verpackungsanlage inaktivierbar ist und/oder einen oder mehrere inaktivierbare Eingänge aufweist. Zum Beispiel können Schütten mehrere Eingänge aufweisen, von denen nicht alle gleichzeitig aktiv sein können, da sie abhängig von der Einstellung der Schütte beispielsweise mechanisch blockiert sind.

Zum Beispiel werden bei dem Bestimmen der Repräsentation des durch die Verpackungsanlage ausführbaren Verpackungsprozesses nur aktive Kanten der Vielzahl von Kanten und durch aktive Kanten der Vielzahl von Kanten verbundene Knoten der Vielzahl von Knoten berücksichtigt. Ferner werden bei dem Bestimmen der Repräsentation des durch die Verpackungsanlage ausführbaren Verpackungsprozesses zum Beispiel keine Knoten der Vielzahl von Knoten, auf die nur inaktive Kanten der Vielzahl von Kanten gerichtet sind und/oder die (z.B. ausschließlich) auf Knoten folgen, auf die nur inaktive Kanten gerichtet sind, und von diesen Knoten ausgehende Kanten berücksichtigt. Dies ist beispielsweise vorteilhaft, um bei dem Bestimmen der Repräsentation des durch die Verpackungsanlage ausführbaren Verpackungsprozesses nur aktive Komponenten der Verpackungsanlage repräsentierende Knoten und nur verwendete Verpackungsprozessverbindungen repräsentierende Kanten zu berücksichtigen.

Zum Beispiel wird die Repräsentation des durch die Verpackungsanlage ausführbaren Verpackungsprozesses derart bestimmt, dass sie nur aktive Kanten der Vielzahl von Kanten und durch aktive Kanten der Vielzahl von Kanten verbundene Knoten der Vielzahl von Knoten umfasst. Ferner wird die Repräsentation des durch die Verpackungsanlage ausführbaren Verpackungsprozesses beispielsweise derart bestimmt, dass sie keine Knoten der Vielzahl von Knoten, auf die nur inaktive Kanten der Vielzahl von Kanten gerichtet sind und/oder die (z.B. ausschließlich) auf Knoten folgen, auf die nur inaktive Kanten gerichtet sind, und von diesen Knoten ausgehende Kanten umfasst.

Das Bestimmen des Graphen kann beispielsweise durch ein Durchlaufen des Graphen von einem Knoten zum nächsten mit diesem Knoten durch eine aktive Kante in Richtung der Kante verbundenen Knoten erfolgen. Dabei wird zum Beispiel mit den Knoten der Vielzahl von Knoten begonnen, auf die keine Kante (z.B. weder eine aktive noch eine inaktive Kante) gerichtet ist. Als Ergebnis des Bestimmens wird beispielsweise ein Teil- und/oder Untergraph des Graphen erhalten, der alle durchlaufenen Knoten der Vielzahl von Knoten und alle durchlaufenen Kanten der Vielzahl von Kanten umfasst.

Gemäß einer beispielhaften Ausführungsform der Erfindung sind die Verpackungsanlagenzustandsdaten indikativ für einen durch die Verpackungsanlage in einem bestimmten Zeitraum ausgeführten Verpackungsprozess. Dies ist beispielsweise vorteilhaft, um eine Repräsentation des Verpackungsprozesses einer in diesem Zeitraum durch die Verpackungsanlage befüllten Packung bestimmen und nachvollziehen zu können.

Gemäß einer beispielhaften Ausführungsform der Erfindung umfasst das Verfahren ferner:
- Bereitstellen und/oder Ausgeben der als Ergebnis des Bestimmens erhaltenen Repräsentation des durch die Verpackungsanlage ausführbaren Verpackungsprozesses.

Das Bereitstellen der als Ergebnis des Bestimmens erhaltenen Repräsentation des durch die Verpackungsanlage ausführbaren Verpackungsprozesses kann beispielsweise durch das Bereithalten von diese Repräsentation repräsentierende Daten (z.B. Teilgraph- und/oder Untergraphdaten) zum Abruf durch andere Vorrichtung und/oder durch das Kommunizieren dieser Daten an eine oder mehrere andere Vorrichtungen erfolgen. Zum Beispiel umfasst die Datenverabeitungsvorrichtung zu diesem Zweck eine Kommunikationsschnittstelle.

Unter dem Ausgeben der als Ergebnis des Bestimmens erhaltenen Repräsentation des durch die Verpackungsanlage ausführbaren Verpackungsprozesses soll beispielsweise verstanden werden, dass die Repräsentation des durch die Verpackungsanlage ausführbaren Verpackungsprozesses durch eine Benutzerschnittstelle (z.B. eine graphische Benutzerschnittstelle) der Datenverarbeitungsvorrichtung als Benutzerinformation (z.B. als graphische Darstellung eines Teil- und/oder Untergraphen des mit der Verpackungsanlage assoziierten Graphen) ausgegeben wird.

Gemäß einer beispielhaften Ausführungsform der Erfindung umfasst die Verpackungsanlage eine oder mehrere der folgenden Komponenten:
- eine Erhitzungsanlage,
- eine Füllmaschine,
- einen Applikator zum Anbringen von Verschlüssen und/oder Trinkhalmen
- eine Weiche,
- eine Schütte,
- einen Shrinker,
- einen Palettierer,
- einen Puffer,
- einen Vertikalspeicher,
- einen Sammelpacker, und/oder
- einen Kartonierer.

Gemäß einer beispielhaften Ausführungsform der Erfindung umfasst die Verpackungsanlage zumindest eine Füllmaschine.

Die oben beschriebenen Ausführungsbeispiele und beispielhaften Ausführungsformen der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1:: ein Flussdiagramm einer beispielhaften Ausführungsform eines erfindungsgemäßen Verfahrens;
- Fig. 2a: einen beispielhaften mit einer Verpackungsanlage assoziierten Graphen;
- Fig. 2b-2c: beispielhafte Unter- und/oder Teilgraphen als jeweilige Repräsentation eines durch Verpackungsanlage ausführbaren Verpackungsprozesses;
- Fig. 3: eine schematische Darstellung einer beispielhaften Ausführungsform einer erfindungsgemäßen Datenverarbeitungsvorrichtung; und
- Fig. 4: beispielhafte Ausführungsformen von Speichermedien.

### Detaillierte Beschreibung einiger beispielhafter Ausführungsformen der Erfindung

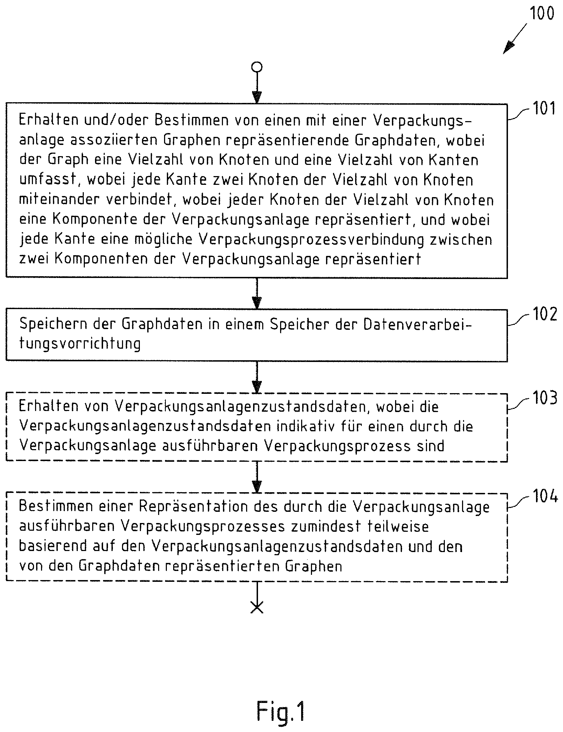

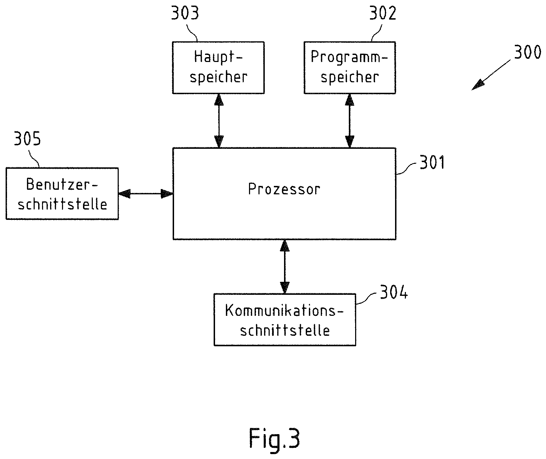

Fig. 1 zeigt ein Flussdiagramm 100 mit Schritten einer beispielhaften Ausführungsform eines erfindungsgemäßen Verfahrens. Die Schritte 101 bis 104 des Flussdiagramms 100 können beispielsweise durch eine Datenverarbeitungsvorrichtung wie die in Fig. 3 dargestellte erfindungsgemäße Datenverarbeitungsvorrichtung 300 ausgeführt werden.

In einem ersten Schritt 101 werden einen mit einer Verpackungsanlage assoziierten Graphen repräsentierende Graphdaten erhalten und/oder bestimmt.

Unter dem Erhalten der Graphdaten soll beispielsweise verstanden werden, dass die Graphdaten durch die Datenverarbeitungsvorrichtung über eine Kommunikationsverbindung empfangen und/oder von einer tragbaren Speichervorrichtung ausgelesen und/oder in Form einer Benutzereingabe erfasst werden. Die in Fig. 3 dargestellte erfindungsgemäße Datenverarbeitungsvorrichtung 300 weist beispielweise eine Kommunikationsschnittstelle 304 zum Empfangen der Graphdaten über eine Kommunikationsverbindung und eine Benutzerschnittstelle 305 zum Erfassen der Graphdaten in Form einer Benutzereingabe auf.

Alternativ oder zusätzlich können die Graphdaten durch die Datenverarbeitungsvorrichtung bestimmt werden. Unter dem Bestimmen der Graphdaten soll beispielsweise das Erzeugen und/oder das Berechnen der Graphdaten verstanden werden. Das Bestimmen der Graphdaten kann zum Beispiel zumindest teilweise basierend auf durch die Datenverarbeitungsvorrichtung erhaltenen Daten (z.B. durch die Datenverarbeitungsvorrichtung über eine Kommunikationsverbindung empfangene und/oder von einer tragbaren Speichervorrichtung ausgelesene und/oder in Form einer Benutzereingabe erfasste Daten) und/oder zumindest teilweise basierend auf vorgegebenen Regeln (z.B. Regeln eines Algorithmus) zum Bestimmen eines mit einer Verpackungsanlage assoziierten Graphen und/oder zum Bestimmen von Graphdaten, die einen mit einer Verpackungsanlage assoziierten Graphen repräsentieren, erfolgen.

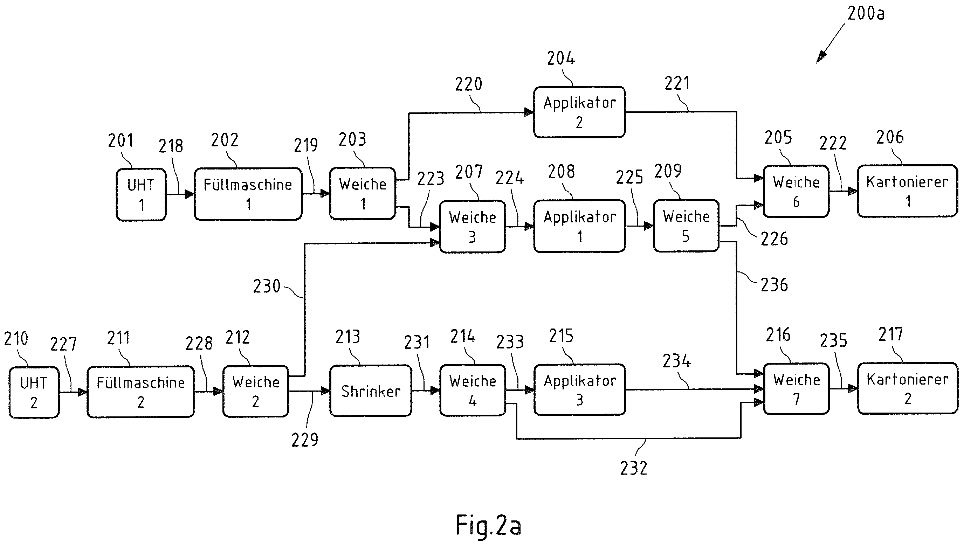

In Fig. 2a ist ein beispielhafter mit einer Verpackungsanlage assoziierter Graph 200a dargestellt. Dabei ist der Graph 200a mit einer Getränkeabfüllanlage als Verpackungsanlage assoziiert. In solchen Anlagen kommen häufig eine Vielzahl von verschiedenen Komponenten zum Einsatz wie beispielsweise Erhitzungsanlagen (z.B. Erhitzungsanlagen zum Ultrahocherhitzen des Füllguts), Füllmaschinen, Applikatoren zum Anbringen von Verschlüssen und/oder Trinkhalmen, Weichen (z.B. Weichen zum Teilen und/oder Vereinigen von Verpackungsprozessverbindungen), Shrinker, Schütten, Sammelpacker, Palettierer, Puffer, Vertikalspeicher und Kartonierer.

Der Graph 200a umfasst eine Vielzahl von Knoten 201 bis 217 und eine Vielzahl von Kanten 218 bis 235.

Jeder Knoten der Vielzahl von Knoten 201 bis 217 repräsentiert eine Komponente der Verpackungsanlage. In Fig. 2a ist die Bezeichnung der durch den jeweiligen Knoten repräsentierten Komponente der Verpackungsanlage als Beschriftung in dem jeweiligen Knoten eingeblendet. Zum Beispiel repräsentiert der Knoten 201 die Erhitzungsanlage UHT 1, der Knoten 202 die Füllmaschine 1, der Knoten 203 die Weiche 1, der Knoten 204 den Applikator 2, der Knoten 205 die Weiche 6, der Knoten 206 den Kartonierer 1, usw.

Ferner repräsentiert jede Kante der Vielzahl von Kanten 218 bis 235 eine mögliche Verpackungsprozessverbindung zwischen zwei Komponenten der Verpackungsanlage. Dabei ist eine Verpackungsprozessverbindung beispielsweise eine während eines durch die Verpackungsanlage ausführbaren Verpackungsprozesses verwendbare Verbindung zwischen zwei Komponenten der Verpackungsanlage. Eine solche Verpackungsprozessverbindung kann beispielsweise in Form eine Förderstrecke (z.B. als Förderband und/oder als Rollenband) zwischen dem Ausgang einer Komponente und dem Eingang einer anderen Komponente in der Verpackungsanlage gebildet sein.

Die Kanten sind in Graph 200a gerichtete Kanten, die jeweils von einem Startknoten zu einem Endknoten gerichtet sind. Dabei entspricht die Richtung einer Kante der Vielzahl von Kanten 218 bis 235 der Richtung, der durch die jeweilige Kante repräsentierten Verpackungsprozessverbindung. Zum Beispiel repräsentiert die Kante 218, die entsprechend der Pfeilrichtung von dem Startknoten 201 zu dem Endknoten 202 gerichtet ist, eine Verpackungsprozessverbindung von einem Ausgang der Erhitzungsanlage UHT 1 zu einem Eingang der Füllmaschine 1.

Um verschiedene Verpackungsprozesse durch eine Verpackungsanlage ausführen zu können, können beispielsweise Komponenten mit mehreren Ausgängen und/oder Eingängen (z.B. Weichen) in der Verpackungsanlage vorgesehen sein, die ein Umfahren von Komponenten der Verpackungsanlage ermöglichen. Wenn eine Komponente (z.B. eine Weiche zum Teilen einer Verpackungsprozessverbindung) der Verpackungsanlage verschiedene Ausgänge aufweist, die mit Eingängen verschiedener Komponenten der Verpackungsanlage verbunden sind, kann jede dieser Prozessverbindungen beispielsweise durch eine jeweilige Kante der Vielzahl von Kanten repräsentiert werden. Dies gilt entsprechend auch, wenn eine Komponente (z.B. eine Weiche zum Vereinigen mehrere Verpackungsprozessverbindungen) mehrere Eingänge aufweist, die mit Ausgängen verschiedener Komponenten der Verpackungsanlage verbunden sind.

Zum Beispiel weist die durch den Knoten 203 repräsentierte Weiche 1 einen Eingang und zwei Ausgänge auf, um die Verpackungsprozessverbindung von einem Ausgang der Füllmaschine 1 in eine erste Verpackungsprozessverbindung zu einem Eingang des Applikators 2 und eine zweite Verpackungsprozessverbindung zu einem Eingang der Weiche 3 zu teilen. Dementsprechend ist in Graph 200a eine Kante 219 vorgesehen, die eine Verpackungsprozessverbindung von einem Ausgang der Füllmaschine 1 zu dem Eingang der Weiche 1 repräsentiert. Ferner sind in Graph 200a eine Kante 220, die eine Verpackungsprozessverbindung von dem ersten Ausgang der Weiche 1 zu einem Eingang des Applikators 2 repräsentiert, und eine Kante 223, die eine Verpackungsprozessverbindung von dem zweiten Ausgang der Weiche 1 zu einem Eingang der Weiche 3 repräsentiert, vorgesehen. Die durch den Knoten 207 repräsentierte Weiche 3 weist dagegen zwei Eingänge und einen Ausgang auf, um die Verpackungsprozessverbindung von einem Ausgang der Weiche 1 und die Verpackungsprozessverbindung von einem Ausgang der Weiche 2 zu vereinigen. Dies wird in Graph 200a durch die Kanten 223, 230 und 224 repräsentiert.

Ferner ist jede Kante der Vielzahl von Kanten 218 bis 235 beispielsweise aktivierbar und inaktivierbar (d.h. deaktivierbar). Dabei ist die Aktivität jeder Kante der Vielzahl von Kanten 218 bis 235 mit der Aktivität der durch den Startknoten der jeweiligen Kante der Vielzahl von Kanten repräsentierten Komponente assoziiert und/oder mit der Aktivität zumindest eines Ausgangs (z.B. eines vorgegebenen Ausgangs) der durch den Startknoten der jeweiligen Kante der Vielzahl von Kanten repräsentierten Komponente der Verpackungsanlage assoziiert. Zum Beispiel ist die Aktivität der oben beschriebenen Kante 220 derart mit dem ersten Ausgang der Weiche 1 assoziiert, dass die Kante 220 nur dann aktiv ist, wenn der erste Ausgang der Weiche 1 aktiv ist. Entsprechend kann die Aktivität der oben ebenfalls beschriebenen Kante 223 beispielsweise derart mit dem zweiten Ausgang der Weiche 1 assoziiert sein, dass die Kante 223 nur dann aktiv ist, wenn der zweite Ausgang der Weiche 1 aktiv ist. Kanten der Vielzahl von Kanten 218 bis 235 wie die oben beschriebene Kante 218, deren Startknoten jeweils eine Komponente mit nur einem einzigen Ausgang repräsentieren, sind beispielsweise standardmäßig aktiv. Dies ist beispielsweise vorteilhaft, wenn die jeweilige Komponenten und deren Ausgang dauerhaft aktiv sind. Für jede andere Kante der Vielzahl von Kanten 218 bis 235 kann beispielsweise in einem optionalen Schritt 104 bestimmt werden, ob die jeweilige Kante aktiv und/oder inaktiv ist, wenn eine Repräsentation des durch die Verpackungsanlage ausführbaren Verpackungsprozesses bestimmt wird. Alternativ kann das Bestimmen für jede Kante der Vielzahl von Kanten 218 bis 235 in dem optionalen Schritt 104 ausgeführt werden.

Im Folgenden wird beispielhaft davon ausgegangen, dass die in Schritt 101 erhaltenen und/oder bestimmten Graphdaten, den Graphen 200a repräsentieren. Zum Beispiel enthalten die Graphdaten zu diesem Zweck entsprechende Datenstrukturen (z.B. die oben offenbarten Knoten- und Kanten-Datenstrukturen), die die Vielzahl von Knoten 201 bis 217 und/ die Vielzahl von Kanten 218 bis 235 des Graphen 200a definieren.

In einem Schritt 102 werden die Graphdaten in einem Speicher der Datenverarbeitungsrichtung gespeichert. Zum Beispiel werden die Graphdaten in dem Programmspeicher 302 und/oder dem Hauptspeicher 303 der in Fig. 3 dargestellten erfindungsgemäßen Datenverarbeitungsvorrichtung gespeichert.

In einem Schritt 103 werden Verpackungsanlagenzustandsdaten erhalten, wobei die Verpackungsanlagenzustandsdaten indikativ für einen durch die mit dem Graphen 200a assoziierte Verpackungsanlage ausführbaren Verpackungsprozess sind.

Wie oben offenbart, können sich verschiedene Verpackungsprozesse durch die an dem Ausführen des jeweiligen Verpackungsprozesses beteiligten Komponenten der Verpackungsanlage unterscheiden. Im Folgenden wird daher beispielhaft davon ausgegangen, dass die Verpackungsanlagenzustandsdaten zumindest indikativ für den aktiven Ausgang der Komponenten mit mehreren Ausgängen sind, die Teil der mit dem Graphen 200a assoziierten Verpackungsanlage sind. Zum Beispiel enthalten die Verpackungsanlagenzustandsdaten Informationen zum aktiven Ausgang dieser Komponenten mit mehreren Ausgängen, zum Beispiel sind diese Informationen indikativ dafür, welcher Ausgang der jeweiligen Komponente während des Verpackungsprozesses aktiv ist (d.h. während des Verpackungsprozesses verwendet wird) und welcher Ausgang der jeweiligen Komponente während des Verpackungsprozesses inaktiv ist (d.h. während des Verpackungsprozesses nicht verwendet wird). Mehrere Ausgänge weisen zum Beispiel die folgenden Komponenten der mit dem Graphen 200a assoziierten Verpackungsanlage auf: Weiche 1, Weiche 2, Weiche 4 und Weiche 5.

Die Verpackungsanlagenzustandsdaten werden von einer oder mehrerer Komponenten (z.B. den Weichen 1, 2, 4 und 5) der Verpackungsanlage über eine oder mehrere Kommunikationsverbindungen an die Datenverarbeitungsvorrichtung kommuniziert. Das Erhalten der Verpackungsanlagenzustandsdaten erfolgt durch das Empfangen der Verpackungsanlagenzustandsdaten durch die Datenverarbeitungsvorrichtung. Alternativ oder zusätzlich können die Verpackungsanlagenzustandsdaten zumindest teilweise in Form einer Benutzereingabe an der Datenverarbeitungsvorrichtung erfasst werden. Zum Beispiel umfasst die Datenverarbeitungsvorrichtung 300 in Fig. 3 entsprechend Mittel wie beispielsweise eine Kommunikationsschnittstelle 304 zum Empfangen von Daten und/oder eine Benutzerschnittstelle 305 zum Erfassen von Daten in Form einer Benutzereingabe.

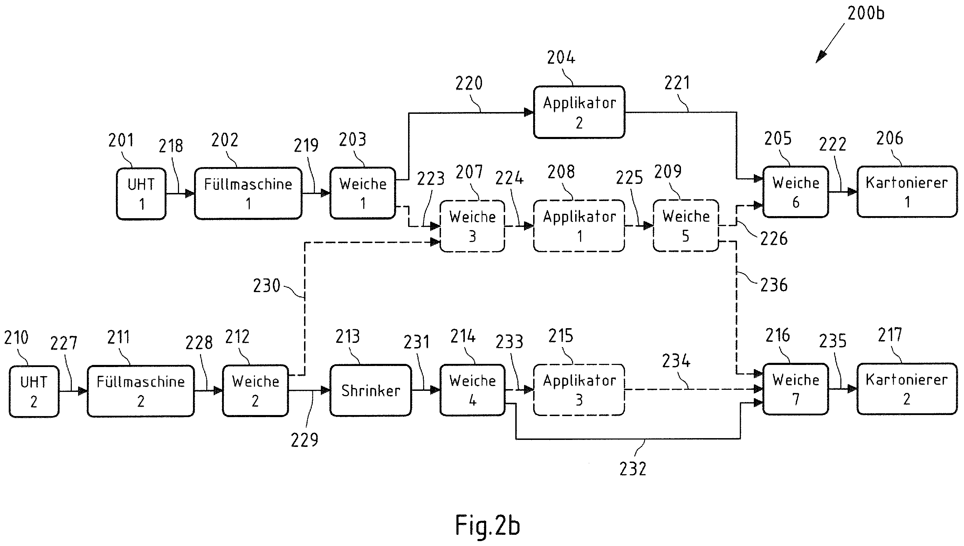

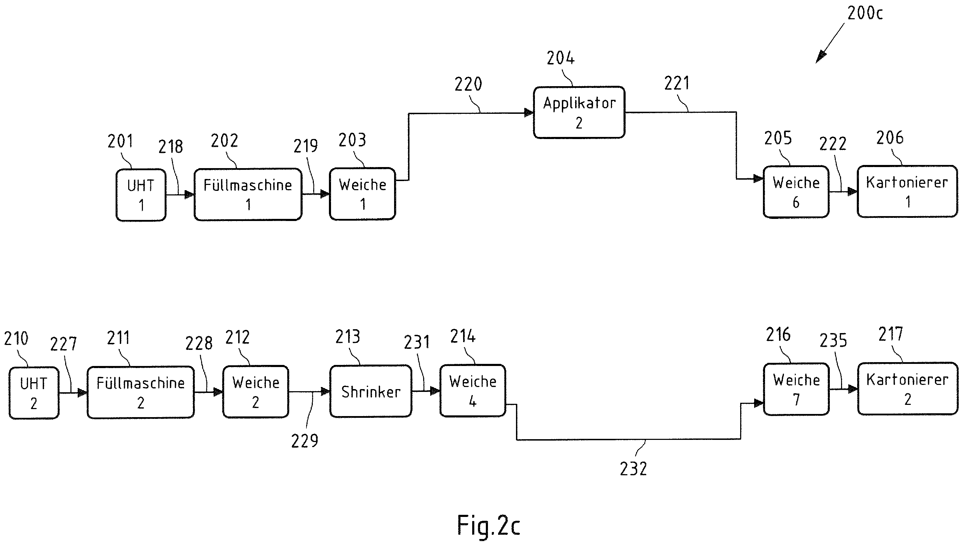

In einem Schritt 104 wird eine Repräsentation des durch die Verpackungsanlage ausführbaren Verpackungsprozesses zumindest teilweise basierend auf den in Schritt 103 erhaltenen Verpackungsanlagenzustandsdaten und dem Graphen 200a bestimmt. Dabei soll unter einer Repräsentation des durch die Verpackungsanlage ausführbaren Verpackungsprozesses beispielsweise ein Teil- und/oder Untergraph des Graphen 200a verstanden werden. Beispielhafte Teil- und/oder Untergraphen 200b und 200c des Graphen 200a sind in den Fig. 2b und 2c gezeigt.

Wie oben offenbart, können die Kanten der Vielzahl von Kanten 218 bis 235 zumindest teilweise aktivierbar und inaktivierbar sein. Zum Beispiel kann das Bestimmen der Repräsentation des durch die Verpackungsanlage ausführbaren Verpackungsprozesses in Schritt 104, wie oben offenbart, das Bestimmen der aktiven und/oder inaktiven Kanten der Vielzahl von Kanten 218 bis 235 zumindest teilweise basierend auf den in Schritt 103 erhaltenen Verpackungsanlagenzustandsdaten und dem Graphen 200a umfassen. Wenn in Schritt 103 beispielsweise Verpackungsanlagenzustandsdaten erhalten wurden, die indikativ dafür sind, dass der mit der Weiche 3 verbundene Ausgang der Weiche 1, der mit der Weiche 3 verbundene Ausgang der Weiche 2, der mit der dem Applikator 3 verbundene Ausgang der Weiche 4 und der mit der Weiche 6 verbundene Ausgang der Weiche 5 inaktiv sind, wird beispielsweise bestimmt, dass die Kanten 223, 230, 233 und 226 des Graphen 200a inaktiv sind. Ferner wird beispielsweise bestimmt, dass die anderen Kanten der Vielzahl von Kanten 218 bis 235 aktiv sind.

Zum Beispiel wird die Repräsentation des durch die Verpackungsanlage ausführbaren Verpackungsprozesses in Schritt 104 derart bestimmt, dass sie nur aktive Kanten der Vielzahl von Kanten und durch aktive Kanten der Vielzahl von Kanten verbundene Knoten der Vielzahl von Knoten umfasst. Ferner wird die Repräsentation des durch die Verpackungsanlage ausführbaren Verpackungsprozesses in Schritt 104 beispielsweise derart bestimmt, dass sie keine Knoten der Vielzahl von Knoten 201 bis 217, auf die nur inaktive Kanten der Vielzahl von Kanten 218 bis 235 gerichtet sind und/oder die (z.B. ausschließlich) auf Knoten folgen, auf die nur inaktive Kanten gerichtet sind, und von diesen Knoten ausgehende Kanten umfasst.

Das Bestimmen der Repräsentation kann beispielsweise durch ein Durchlaufen des Graphen 200a von einem Knoten zum nächsten mit diesem Knoten durch eine aktive Kante verbundenen Knoten in Richtung der Kante erfolgen. Dabei wird zum Beispiel mit den Knoten 201 und 210 der Vielzahl von Knoten begonnen, auf die keine Kante (z.B. weder eine aktive noch eine inaktive Kante) gerichtet ist. Als Ergebnis des Bestimmens wird beispielsweise ein Teil- und/oder Untergraph des Graphen 200a erhalten, der alle durchlaufenen Knoten der Vielzahl von Knoten 201 bis 217 und alle durchlaufenen Kanten der Vielzahl von Kanten 218 bis 235 umfasst. In dem oben beschriebenen Beispiel, dass bestimmt wird, dass die Kanten 223, 230, 233 und 226 des Graphen 200a inaktiv sind, werden dementsprechend die in Fig. 2b gestrichelt dargestellten Komponenten 207, 208, 209 und 215 sowie die gestrichelt dargestellten Kanten 223, 224, 225, 226, 230, 233 und 234 beim Bestimmen der Repräsentation in Schritt 104 beispielsweise nicht berücksichtigt, da diese Komponenten und Kanten nicht durchlaufen werden. Als Ergebnis des Bestimmens in Schritt 104 wird in diesem Beispiel somit der in Fig. 2c dargestellte Teil- und/oder Untergraph 200c des Graphen 200a erhalten.

Anschließend kann die in Schritt 104 bestimmte Repräsentation beispielsweise ausgegeben werden (z.B. durch eine graphische Benutzerschnittstelle der Datenverarbeitungsvorrichtung).

Fig. 3 ist eine schematische Darstellung einer beispielhaften Ausführungsform einer erfindungsgemäßen Datenverarbeitungsvorrichtung 300.

Die Datenverarbeitungsvorrichtung 300 umfasst beispielhaft einen Prozessor 301 und verbunden mit dem Prozessor 301 einen ersten Speicher als Programm- und Datenspeicher 302, einen zweiten Speicher als Hauptspeicher 303, eine Kommunikationsschnittstelle 304 und eine Benutzerschnittstelle 305.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Datenverarbeitungsvorrichtung 300 auch mehrere Prozessoren 10 umfassen kann.

Prozessor 301 führt Programmanweisungen aus, die in Programmspeicher 302 gespeichert sind, und speichert beispielsweise Zwischenergebnisse oder ähnliches in Hauptspeicher 303.

Dabei soll unter einem Programmspeicher beispielsweise der Speicher der Datenverarbeitungsvorrichtung verstanden werden, in dem Computerprogramme und Programmanweisungen sowie Daten dauerhaft gespeichert werden. Ein Hauptspeicher ist beispielsweise der Speicher der Datenverarbeitungsvorrichtung, der die durch einen Prozessor der Datenverarbeitungsvorrichtung ausgeführten Computerprogramme und/oder Programmanweisungen enthält und in dem beispielsweise Zwischenergebnisse oder ähnliches gespeichert (z.B. zwischengespeichert) werden.

Zum Beispiel können der Programmspeicher 302 und/oder der Hauptspeicher 303 die Graphdaten, wie oben offenbart, enthalten (z.B. werden die Graphdaten in Schritt 102 des in Fig. 1 dargestellten Flussdiagramms 100 in Programmspeicher 302 und/oder der Hauptspeicher 303 gespeichert). Der Programmspeicher 302 enthält ferner beispielsweise Programmanweisungen eines erfindungsgemäßen Computerprogramms, das Programmanweisungen umfasst, die den Prozessor 301 veranlassen, das erfindungsgemäße Verfahren (z.B. das Verfahren gemäß dem in Fig. 1 dargestellten Flussdiagram 100) auszuführen und/oder zu steuern, wenn der Prozessor 301 diese in Programmspeicher 302 gespeicherten Programmanweisungen ausführt. Programmspeicher 302 kann außerdem beispielsweise das Betriebssystem der Datenverarbeitungsvorrichtung 300 enthalten, das beim Starten der Datenverarbeitungsvorrichtung 300 zumindest teilweise in Hauptspeicher 303 geladen und vom Prozessor 301 ausgeführt wird. Insbesondere wird beim Starten der Datenverarbeitungsvorrichtung 300 zumindest ein Teil des Kerns des Betriebssystems in den Hauptspeicher 303 geladen und von Prozessor 301 ausgeführt.

Ein Beispiel für ein Betriebssystem ist ein Windows -, UNIX-, Linux-, Android-, Apple iOS-und/oder MAC OS-Betriebssystem. Das Betriebssystem ermöglicht insbesondere die Verwendung der Datenverarbeitungsvorrichtung 300 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 303 und Programmspeicher 302 können auch als ein Speicher ausgebildet sein. Alternativ können Hauptspeicher 303 und/oder Programmspeicher 302 jeweils durch mehrere Speicher gebildet werden. Ferner können Hauptspeicher 303 und/oder Programmspeicher 302 auch Teil des Prozessors 301 sein.

Darüber hinaus steuert Prozessor 301 die Kommunikationsschnittstelle 304.

Eine Kommunikationsschnittstelle kann beispielsweise Daten gemäß einer Kommunikationstechnik empfangen und an den Prozessor weiterleiten und/oder Daten von dem Prozessor empfangen und gemäß einer Kommunikationstechnik senden. Beispiele für eine solche Kommunikationstechnik sind Kommunikationsverbindungen über ein Kommunikationsnetzwerk wie ein Ethernet-Netzwerk und/oder ein WLAN-Netzwerk. Ethernet-Netzwerke sind zum Beispiel in den Standards der IEEE-802.3-Familie spezifiziert; und WLAN ist zum Beispiel in den Standards der IEEE-802.11-Familie spezifiziert. Weitere Beispiele für eine solche Kommunikationstechnik sind Kommunikationsverbindungen über ein Bussystem wie Echtzeit-Ethernet-Netzwerke (z.B. EtherCAT, das unter anderem in den Standards IEC-61158 und IEC-61784-2 spezifiziert ist).

Ferner steuert Prozessor 301 die graphische Benutzerschnittstelle 305, welche eingerichtet ist zum Ausgeben von graphischen Informationen an einen Benutzer. Ferner kann die graphische Benutzerschnittstelle beispielsweise auch eingerichtet sein zum Erfassen von Benutzereingaben eines Benutzers (z.B. durch das Erfassen von Berührungen der graphischen Benutzeroberfläche). Unter einer graphischen Benutzerschnittstelle soll beispielsweise ein Bildschirm (z.B. ein berührungsempfindlicher Bildschirm) verstanden werden.

Die Komponenten 301 bis 305 der Datenverarbeitungsvorrichtung 300 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Datenverarbeitungsvorrichtung 300 neben den Komponenten 301 bis 305 weitere Komponenten (z.B. eine oder mehrere weitere Kommunikationsschnittstellen und/oder eine oder mehrere weitere Benutzerschnittstellen) umfassen kann.

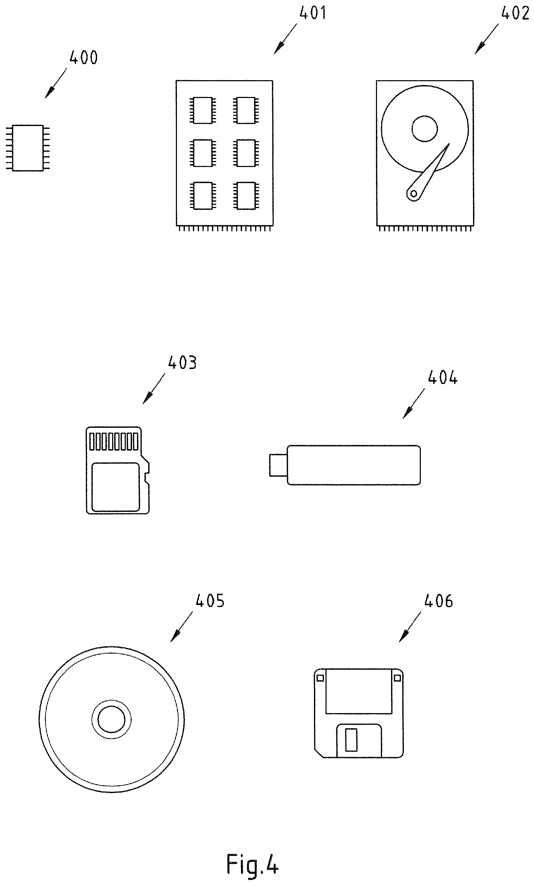

Fig. 4 zeigt schließlich beispielhafte Ausführungsformen von Speichermedien, auf denen ein Ausführungsbeispiel eines erfindungsgemäßen Computerprogramms gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 301 der Fig. 3) sein, beispielsweise ein (nicht-flüchtiger oder flüchtiger) Programmspeicher des Prozessors oder ein Teil davon (z.B. Speicher 302 in Fig. 3). Ausführungsbeispiele eines Speichermediums sind ein Flash-Speicher 400, eine SSD-Festplatte 401, eine magnetische Festplatte 402, eine Speicherkarte 403, ein Memory Stick 404 (z.B. ein USB-Stick), eine CD-ROM oder DVD 405 oder eine Diskette 406.

Die in dieser Spezifikation beschriebenen beispielhaften Ausführungsformen und Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, ausgeführt durch eine Datenverarbeitungsvorrichtung (300), das Verfahren umfassend:
- Erhalten und/oder Bestimmen (101) von Graphdaten, wobei die Graphdaten einen mit einer Verpackungsanlage assoziierten Graphen (200a) repräsentieren, wobei der Graph (200a) eine Vielzahl von Knoten (201-217) und eine Vielzahl von Kanten (218-235) umfasst, wobei jede Kante der Vielzahl von Kanten (218-235) zwei Knoten der Vielzahl von Knoten (201-217) miteinander verbindet, wobei jeder Knoten der Vielzahl von Knoten (201-217) eine Komponente der Verpackungsanlage repräsentiert, und wobei jede Kante der Vielzahl von Kanten (218-235) eine mögliche Verpackungsprozessverbindung zwischen zwei Komponenten der Verpackungsanlage repräsentiert;
- Speichern (102) der Graphdaten in einem Speicher (302, 303) der Datenverarbeitungsvorrichtung (300);
- Empfangen von Verpackungsanlagenzustandsdaten, wobei die Verpackungsanlagenzustandsdaten indikativ für einen durch die Verpackungsanlage ausführbaren Verpackungsprozess sind, und
wobei die Verpackungsanlagenzustandsdaten von einer oder mehrerer Komponenten der Verpackungsanlage über eine Kommunikationsverbindung an die Datenverarbeitungsvorrichtung (300) kommuniziert werden; und
- Bestimmen (104) einer Repräsentation (200c) des durch die Verpackungsanlage ausführbaren Verpackungsprozesses zumindest teilweise basierend auf den Verpackungsanlagenzustandsdaten und dem von den Graphdaten repräsentierten Graphen (200a), so dass für das Bestimmen nur die Graphdaten in einem Speicher der Datenverarbeitungsvorrichtung gespeichert sein müssen, wobei die Repräsentation (200c) des durch die Verpackungsanlage ausführbaren Verpackungsprozesses eine Untermenge der Vielzahl von Knoten (201-217) und/oder eine Untermenge der Vielzahl von Kanten (218-235) umfasst.

2. Verfahren gemäß Anspruch 1, wobei die Verpackungsanlage eingerichtet ist, zumindest zwei verschiedene Verpackungsprozesse auszuführen.

3. Verfahren gemäß einem der Ansprüche 1 und 2, wobei der mit einer Verpackungsanlage assoziierte Graph (200a) alle durch die Verpackungsanlage ausführbaren Verpackungsprozesse darstellt.

4. Verfahren gemäß Anspruch 3, wobei die Verpackungsanlagenzustandsdaten Informationen zur Aktivität und/oder zum aktiven Ausgang einer oder mehrerer Komponenten der Verpackungsanlage enthalten.

5. Verfahren gemäß Anspruch 4, wobei jede Kante der Vielzahl von Kanten (218-235) eine gerichtete Kante ist, wobei jede Kante der Vielzahl von Kanten (218-235) aktivierbar und inaktivierbar ist, und wobei der Aktivitätszustand jeder Kante der Vielzahl von Kanten (218-235) zumindest mit der Aktivität und/oder dem aktiven Ausgang der durch den Startknoten der jeweiligen Kante der Vielzahl von Kanten (218-235) repräsentierten Komponente der Verpackungsanlage assoziiert ist.

6. Verfahren gemäß Anspruch 5, wobei bei dem Bestimmen (104) der Repräsentation (200c) des durch die Verpackungsanlage ausführbaren Verpackungsprozesses nur aktive Kanten der Vielzahl von Kanten (218-235) und durch aktive Kanten der Vielzahl von Kanten (218-235) verbundene Knoten der Vielzahl von Knoten (201-217) berücksichtigt werden.

7. Verfahren gemäß einem der Ansprüche 3 bis 6, wobei die Verpackungsanlagenzustandsdaten indikativ für einen durch die Verpackungsanlage in einem bestimmten Zeitraum ausgeführten Verpackungsprozess sind.

8. Verfahren gemäß einem der Ansprüche 3 bis 7, das Verfahren ferner umfassend:
- Bereitstellen und/oder Ausgeben der als Ergebnis des Bestimmens erhaltenen Repräsentation des durch die Verpackungsanlage ausführbaren Verpackungsprozesses.

9. Verfahren gemäß einem der Ansprüche 1 bis 8, wobei die Verpackungsanlage eine oder mehrere der folgenden Komponenten umfasst:
- eine Erhitzungsanlage,
- eine Füllmaschine,
- einen Applikator zum Anbringen von Verschlüssen und/oder Trinkhalmen
- eine Weiche,
- eine Schütte,
- einen Sammelpacker,
- einen Palettierer,
- einen Puffer,
- einen Vertikalspeicher, und/oder
- einen Kartonierer.

10. Computerprogramm, umfassend Programmanweisungen, die einen Prozessor (300) zur Ausführung und/oder Steuerung des Verfahrens nach einem der Ansprüche 1-9 veranlassen, wenn das Computerprogramm von dem Prozessor (300) ausgeführt wird.

11. Eine Datenverarbeitungsvorrichtung, eingerichtet zur Ausführung und/oder Steuerung des Verfahrens nach einem der Ansprüche 1-9 oder umfassend jeweilige Mittel (301-305) zur Ausführung und/oder Steuerung der Schritte des Verfahrens nach einem der Ansprüche 1-9.

12. System, umfassend:
- eine Datenverarbeitungsvorrichtung (300) nach Anspruch 11; und
- eine Verpackungsanlage.

## Claims

1. Method performed by a data processing device (300), the method comprising:
- obtaining and/or determining (101) graph data, wherein the graph data represent a graph (200a) associated with a packaging plant, wherein the graph (200a) comprises a plurality of nodes (201-217) and a plurality of edges (218-235), wherein each edge from the plurality of edges (218-235) connects two nodes from the plurality of nodes (201-217) with one another, wherein each node from the plurality of nodes (201-217) represents a component of the packaging plant, and wherein each edge from the plurality of edges (218-235) represents a possible packaging process connection between two components of the packaging plant;
- storing (102) of the graph data in a memory (302, 303) of the data processing device (300);
- receiving of packaging plant status data, wherein the packaging plant status data are indicative of a packaging process that is feasible by the packaging plant; and
wherein the packaging plant status data is communicated to the data processing device (300) by one or more components of the packaging plant via a communication connection; and
- determining (104) of a representation (200c) of the packaging process that is feasible by the packaging plant at least partially based on the packaging plant status data and the graph (200a) represented by the graph data, so that only graph data need to be stored in a memory of the data processing device for the determining, wherein the representation (200c) of the feasible packaging process of the packaging plant comprises a subset of the plurality of nodes (201-217) and/or a subset of the plurality of edges (218-235).

2. Method according to Claim 1, wherein the packaging plant is configured to perform at least two different packaging processes.

3. Method according to either Claim 1 and Claim 2, wherein the graph (200a) associated with a packaging plant represents all packaging processes feasible by the packaging plant.

4. Method according to Claim 3, wherein the packaging plant status data contain information on the activity and/or the active output of one or more components of the packaging plant.

5. Method according to Claim 4, wherein each edge from the plurality of edges (218-235) is a directed edge, wherein each edge from the plurality of edges (218-235) is activatable and inactivatable, and wherein the activity status of each edge from the plurality of edges (218-235) is at least associated with the activity and/or with the active output of the component of the packaging plant represented by the starting node of the respective edge from the plurality of edges (218-235).

6. Method according to Claim 5, wherein, when determining (104) the representation (200c) of the packaging process that is feasible by the packaging plant, only active edges from the plurality of edges (218-235) and nodes from the plurality of nodes (201-217) connected by active edges from the plurality of edges (218-235) are taken into account.

7. Method according to any one of Claim 3 to Claim 6, wherein the packaging plant status data are indicative of a packaging process performed by the packaging plant within a certain time frame.

8. Method according to any one of Claim 3 to Claim 7, the method further comprising:
- providing and/or outputting of the representation of the packaging process that is feasible by the packaging plant obtained as result of the determining.

9. Method according to any one of Claim 1 to Claim 8, wherein the packaging plant comprises one or more of the following components:
- a heating system,
- a filling machine,
- an applicator for the application of closures and/or drinking straws
- a switch,
- a chute,
- a bulk packer,
- a palletiser,
- a buffer,
- a vertical storage, and/or
- a cartoner.

10. Computer program, comprising program instructions that cause a processor (300) to perform and/or control the method according to any one of Claim 1 to Claim 9 if the computer program is executed by the processor (300).

11. A data processing device configured to perform and/or control the method according to any one of Claim 1 to Claim 9 or comprising respective means (301-305) for performing and/or controlling the steps of the method according to any one of Claim 1 to Claim 9.

12. System, comprising:
- a data processing device (300) according to Claim 11; and
- a packaging plant

## Revendications

1. Procédé exécuté par un dispositif de traitement de données (300), le procédé comprenant :
- l'obtention et/ou la détermination (101) de données graphiques, dans lequel les données graphiques représentent un graphe (200a) associé à une installation d'emballage, dans lequel le graphe (200a) comprend une pluralité de nœuds (201-217) et une pluralité d'arêtes (218-235), dans lequel chaque arête de la pluralité d'arêtes (218-235) relie deux nœuds de la pluralité de nœuds (201-217) l'un à l'autre, dans lequel chaque nœud de la pluralité de nœuds (201-217) représente un composant de l'installation d'emballage, et dans lequel chaque arête de la pluralité d'arêtes (218-235) représente une liaison de processus d'emballage possible entre deux composants de l'installation d'emballage ;
- la mémorisation (102) des données graphiques dans une mémoire (302, 303) du dispositif de traitement de données (300) ;
- la réception de données d'état d'installation d'emballage, dans lequel les données d'état d'installation d'emballage sont indicatives d'un processus d'emballage pouvant être exécuté par l'installation d'emballage, et
dans lequel les données d'état d'installation d'emballage sont communiquées par un ou plusieurs composants de l'installation d'emballage par l'intermédiaire d'une liaison de communication au dispositif de traitement de données (300) ; et
- la détermination (104) d'une représentation (200c) du processus d'emballage pouvant être exécuté par l'installation d'emballage au moins en partie sur la base des données d'état d'installation d'emballage et du graphe (200a) représenté par les données graphiques de telle sorte que pour la détermination, seules les données graphiques doivent être mémorisées dans une mémoire du dispositif de traitement de données, dans lequel la représentation (200c) du processus d'emballage pouvant être exécuté par l'installation d'emballage comprend une sous-quantité de la pluralité de nœuds (201-217) et/ou une sous-quantité de la pluralité d'arêtes (218-235).

2. Procédé selon la revendication 1, dans lequel l'installation d'emballage est mise au point pour exécuter au moins deux processus d'emballage différents.

3. Procédé selon l'une quelconque des revendications 1 et 2, dans lequel le graphe (200a) associé à une installation d'emballage représente tous les processus d'emballage pouvant être exécutés par l'installation d'emballage.

4. Procédé selon la revendication 3, dans lequel les données d'état d'installation d'emballage contiennent des informations relatives à l'activité et/ou à la sortie active d'un ou de plusieurs composants de l'installation d'emballage.

5. Procédé selon la revendication 4, dans lequel chaque arête de la pluralité d'arêtes (218-235) est une arête dirigée, dans lequel chaque arête de la pluralité d'arêtes (218-235) peut être activée et désactivée, et dans lequel l'état d'activité de chaque arête de la pluralité d'arêtes (218-235) est associé au moins à l'activité et/ou à la sortie active du composant, représenté par le nœud de départ de l'arête respective de la pluralité d'arêtes (218-235), de l'installation d'emballage.

6. Procédé selon la revendication 5, dans lequel lors de la détermination (104) de la représentation (200c) du processus d'emballage pouvant être exécuté par l'installation d'emballage, seules des arêtes actives de la pluralité d'arêtes (218-235) et des nœuds, reliés par des arêtes actives de la pluralité d'arêtes (218-235), de la pluralité de nœuds (201-217) sont prises en compte.

7. Procédé selon l'une quelconque des revendications 3 à 6, dans lequel les données d'état d'installation d'emballage sont indicatives d'un processus d'emballage exécuté par l'installation d'emballage dans un intervalle de temps déterminé.

8. Procédé selon l'une quelconque des revendications 3 à 7, le procédé comprenant en outre :
- la fourniture et/ou l'émission de la représentation, obtenue en tant que résultat de la détermination, du processus d'emballage pouvant être exécuté par l'installation d'emballage.

9. Procédé selon l'une quelconque des revendications 1 à 8, dans lequel l'installation d'emballage comprend un ou plusieurs des composants suivants :
- une installation de chauffage,
- une remplisseuse,
- un applicateur pour appliquer de fermetures et/ou de pailles,
- un système d'aiguillage,
- une glissière,
- un dispositif de mise en caisse,
- un palettiseur,
- un tampon,
- un accumulateur vertical, et/ou
- un dispositif pour encartonner.

10. Programme informatique comprenant des instructions de programme, qui amènent un processeur (300) à exécuter et/ou à commander le procédé selon l'une quelconque des revendications 1-9 quand le programme informatique est exécuté par le processeur (300).

11. Dispositif de traitement de données mis au point pour exécuter et/ou commander le procédé selon l'une quelconque des revendications 1-9 ou comprenant des moyens (301-305) respectifs pour exécuter et/ou commander les étapes du procédé selon l'une quelconque des revendications 1-9.

12. Système comprenant :
- un dispositif de traitement de données (300) selon la revendication 11 ; et
- une installation d'emballage.
